# EUROPÄISCHE PATENTSCHRIFT

(11) **EP 1 146 985 B1**
(45) Veröffentlichungstag und Bekanntmachung des Hinweises auf die Patenterteilung: **02.11.2006**
(21) Anmeldenummer: 00901087.7
(22) Anmeldetag: 11.01.2000
(51) Int. Cl.: B23K 1/00

(54) **METALLFOLIENVERBINDUNG UND METALLFOLIEN-LOTKORNFRAKTION FÜR METALLFOLIEN**
METAL FOIL CONNECTION AND SOLDER GRAIN FRACTION FOR METAL FOIL CONNECTION
LIAISON DE FEUILLES METALLIQUES ET FRACTION DE GRAINS DE BRASURE POUR FEUILLES METALLIQUES

(30) Priorität: 27.01.1999 DE 19903184
(43) Veröffentlichungstag der Anmeldung: 24.10.2001
(73) Patentinhaber: Emitec Gesellschaft für Emissionstechnologie mbH, 53797 Lohmar (DE)
(72) Erfinder: WIERES, Ludwig, D-51491 Overath (DE); KURTH, Ferdi, D-53894 Mechernich (DE); SCHLOTMANN, Helge, D-51467 Bergisch Gladbach (DE)
(74) Vertreter: Kahlhöfer, Hermann
(86) Internationale Anmeldenummer: PCT/EP2000/000140
(87) Internationale Veröffentlichungsnummer: WO 2000/044522

(56) Entgegenhaltungen:
- DE-C- 4 219 145

## Beschreibung

Die vorliegende Erfindung betrifft Verfahren zur Herstellung einer Metallfolienverbindung einer ersten und einer zweiten Metallfolie. Die erste und die zweite Metallfolie weisen jeweils eine Dicke von weniger als 0,05 mm auf und sind miteinander an einer Verbindungsstelle verlötet. Die Verbindungsstelle hat einen Zwickel, der mit Lot gefüllt ist. Weiterhin betrifft die Erfindung ein Verfahren zur Herstellung eines Wabenkörpers aus Blechlagen. Die Blechlagen werden aus zumindest teilweise strukturierter Metallfolie gebildet, wobei die Metallfolie eine Dicke von weniger als 0,05. mm aufweist. Die Blechlagen sind zumindest zum Teil miteinander verlötet An den verlöteten Verbindungsstellen haben sie jeweils einen oder zwei Zwickel, der mit Lot gefüllt ist.

Lotverfahren sowie Lotverbindungen für beispielsweise einen metallischen Wabenkörper gehören für Blechlagen zum Stand der Technik. Aus der DE 42 19 45 C1 geht hervor, daß ein Wabenkörper in ein Wirbelbett aus Lotpulver eingetaucht wird. Der vorbehandelte Wabenkörper bildet an den gewünschten Stellen Lotkörner aus einer Lotkornfraktion. Die Lotkorngröße soll zwischen 1 bis 200 Mikrometer, vorzugsweise zwischen 38 und 125 Mikrometer liegen, wobei Korngrößen in der unteren Hälfte dieses Bereiches häufiger erwünscht werden als in der oberen Hälfte. Weitere Belotungsverfahren gehen ebenfalls aus dieser Schrift hervor. Die zum Stand der Technik gehörenden Belotungsverfahren werden erfolgreich bei der Verlotung von Wabenkörpern eingesetzt, deren Blechlagen aus Blechen bestehen, deren Materialdicken mindestens 50 Mikrometer und mehr betragen.

Aufgabe der vorliegenden Erfindung ist es nun, für dünne Metallfolien mit einer Dicke von weniger als 50 Mikrometern, insbesondere weniger als 40 Mikrometer eine haltbare Metallfolienverbindung sowie Mittel zu deren Herstellung anzugeben.

Diese Aufgabe wird mit einem Verfahren zur Herstellung einer Metallfolienverbindung einer ersten und einer zweiten Metallfolie gemäß den Merkmalen des Anspruches 1, einem weiteren Verfahren mit den Merkmalen des Anspruches 2, einem Verfahren zur Herstellung eines Wabenkörpers aus Blechlagen mit den Merkmalen gemäß des Anspruches 11 gelöst. Weitere vorteilhafte Ausgestaltungen und Weiterbildungen sind in den abhängigen Ansprüchen angegeben.

Gemäß einem ersten Verfahren wird die Metallfolienverbindung einer ersten und einer zweiten Metallfolie hergestellt, indem die erste und die zweite Metallfolie eine Dicke von weniger 0,04 mm aufweisen und miteinander an einer Verbindungsstelle-verlötet sind, wobei die Verbindungsstelle einen Zwickel hat, der mit Luft gefüllt ist, hat eine Masse ML des Lotes und eine Masse MF derjenigen Abschnitte der Metallfolien, die das Lot im Zwickel kontaktiert, die ein in etwa vorgebbares Verhältnis haben, wobei das Verhältnis von MF/ML von etwa 4 bis etwa 8 reicht.

Gemäß einem zweiten Verfahren wird die Metallfolienverbindung einer ersten und einer zweiten Metallfolie hergestellt, indem die erste und die zweite Metallfolie eine Dicke von weniger als 0,04 mm aufweisen und miteinander an einer Verbindungsstelle verlötet sind, wobei die Verbindungsstelle einen oder zwei Zwickel hat, der mit Lot gefüllt ist, weist im Zwickel eine Masse des Lotes ML im Verhältnis zu einer Metallfoliendicke DF von etwa MIJDF=8 g/m bis 16 g/m auf

Bei Versuchen, dünnere Metallfolien mit einer Materialdicke von weniger als 50 Mikrometern zu verlöten, insbesondere bei der Herstellung eines Wabenkörpers wurde festgestellt, daß Zellen regelrecht wegschmelzen, wenn der Wabenkörper auf Belotungstemperatur gebracht wurde. Auch mußte festgestellt werden, daß die Zellen des Wabenkörpers deformiert wurden. Erst als eine eingebrachte Lotmenge pro Verbindungsstelle gegenüber bisher verwendeten Blechdicken entsprechend der obigen Einstellregel verwendet wurde, konnte durch die damit definierte, im Zwickel eingebrachte Lotmenge erreicht werden, daß die Metallfolien zum einen sich nicht ablösten und eine Randspaltbildung verhindert wurde, zum anderen aber eine dauerhafte Verbindung der Lotstellen geschaffen wurde.

Verwendet man eine Metallfolie für eine Metallfolienverbindung, deren Metallfoliendicke DF zwischen 0,05 mm und 0,03 mm beträgt, so läßt sich die zu verwendende Masse des Lotes ML für die Metallfolienverbindung überraschenderweise in einer etwa linearen Abhängigkeit zur Metallfoliendicke DF wählen. Je dünner die Metallfoliendicke DF ist, um so geringer ist die Masse des zu verwendenden Lotes ML. Eine Obergrenze wie auch eine Untergrenze der noch verwendbaren Masse an Lot ML läßt sich somit für einige Metallfoliendicken DF bestimmen und auf andere Metallfoliendicken interpolieren oder extrapolieren. Bildet man ein Verhältnis zwischen der Masse des Lotes ML zur Metallfoliendicke DF, so hat sich eine Obergrenze in der Größe des Verhältnisses ML/DF = 14,6 g/m mit einer Abweichung von + 5% und - 5% als zweckmäßig erwiesen. Als eine Untergrenze des noch verwendbaren Verhältnisses der Masse des Lotes ML zur Metallfoliendicke DF hat sich ein Verhältnis von ML/DF = 8,7 g/m mit einer Abweichung von + 5% und -5% als zweckmäßig erwiesen. Aus diesen beiden angegebenen Verhältnissen als Ober- bzw. Untergrenze läßt sich für eine Metallfoliendicke DF von weniger als 0,05 mm bis etwa 0,03 mm der zu verwendende Bereich sehr genau festlegen. Die besten Ergebnisse bezüglich der Haltbarkeit der Metallfolienverbindung haben sich ergeben, wenn ein Verhältnis der Masse des Lotes ML im Zwickel im Verhältnis zu der Metallfoliendicke DF etwa ML/DF = 11 g/m mit einer Abweichung von + 15% und -10% betragen hat.

Bei der Verwendung von Metallfoliendicken DF für die Metallfolienverbindung von etwa 0,03 mm und weniger kann der oben angegebene lineare Zusammenhang ebenfalls angewendet werden, um zufriedenstellende Ergebnisse zu erhalten. Überraschenderweise hat sich aber herausgestellt, daß bei Metallfoliendicken DF von weniger als 0,03 mm nicht nur weiterhin ein linearer Zusammenhang zwischen verwendbarer Lotmenge und Metallfoliendicke DF existiert. Vielmehr ändert sich auch die Steigung dieser Linearität gegenüber einem Bereich der Metallfoliendicke DF von weniger als 0,05 mm bis etwa 0,03 mm. Diese flacht etwas ab. Vorzugsweise wird bei Metallfoliendicken DF von etwa 0,03 mm und weniger eine Obergrenze der Masse des Lotes ML in Abhängigkeit zur Metallfoliendicke DF entlang einer Kurve ausgewählt, die durch die folgenden Punkte (ML/DF; DF) verläuft: (14,6 g/m; 0,03 mm), (14,8 g/m; 0,025 mm), (16 g/m; 0,02 mm), (27 g/m; 0,01 mm). Eine untere Grenze bei einer Metallfoliendicke DF von etwa 0,03 mm und weniger für die zu verwendende Masse des Lotes ML in Abhängigkeit zur Metallfoliendicke DF wird vorteilhafterweise aus einer Kurve ausgewählt, die entlang durch die folgenden Punkte (ML/DF; DF) verläuft: (8,6 g/m; 0,03 mm), (9 g/m; 0,025 mm), (9,2 g/m; 0,02 mm), (16 g/m; 0,01 mm). Äußerst haltbare Metallfolienverbindungen bei einer Metallfoliendicke DF von etwa 0,03 mm und weniger haben sich ergeben, wenn die Masse des Lotes ML in Abhängigkeit zur Metallfoliendicke DF aus einer Kurve ausgewählt wurde, die durch die folgenden Punkte (ML/DF; DF) verläuft: (11 g/m; 0,03 mm), (11,2 g/m; 0,025 mm), (12 g/m; 0,02 mm), (20 g/m; 0,01 mm). Auch für diese Kurven gelten eine Abweichung von +5% und -5%.

Ein bevorzugtes Einsatzgebiet für die oben genannten Metallfolienverbindungen sind Wabenkörper aus Blechlagen. Ein derartiger Wabenkörper aus Blechlagen wird aus zumindest teilweise strukturierter Metallfolie gebildet. Die Metallfolie hat eine Dicke von weniger als 0,05 mm, wobei die Blechlagen zumindest zum Teil miteinander verlötet sind und an den verlöteten Verbindungsstellen jeweils einen oder zwei Zwickel haben, der mit Lot gefüllt ist. Bei Verwendung der oben angeführten Einstellregeln zur Metallfolienverbindung stellte sich heraus, daß die Haltbarkeit des Wabenkörpers gegenüber mechanischen Belastungen sehr viel höher war gegenüber der Verwendung von Lotmengen, wie sie bisher üblich gewesen sind. Auch konnte bei Verwendung unterschiedlichster Metallfoliendicken durch Berücksichtigung der Einstellregel zwischen Masse des Lotes ML und Metallfoliendicke DF in schneller und einfacher Weise die zweckmäßigste Lotmenge gefunden werden. Aber nicht nur die Haltbarkeit, sondern ebenfalls die oben genannten Probleme wie Zellenverbrennungen, Zellendeformationen, Lagenablösungen und Randspaltbildungen wurden bei Einhaltung der Einstellregeln für die Metallfolienverbindungen vermieden.

Ein weiteres nicht zur Erfindung gehörendes Mittel, um eine haltbare Metallfolienverbindung herstellen zu können, wird durch Verwendung einer geeigneten Metallfolien-Lotkornfraktion geschaffen. Die Metallfolien-Lotkornfraktion zur Herstellung einer Lotverbindung zwischen einer ersten und einer zweiten Metallfolie, die an der Lotverbindung einen Zwickel bilden, insbesondere zur Herstellung der Lotverbindung eines Wabenkörpers aus Metallfolie, wobei die Lotkornfraktion eine Korngröße zwischen 0,01 mm und 0,2 mm hat, setzt sich gemäß der Metallfoliendicke folgendermaßen zusammen:
- für eine Dicke von etwa 0,05 mm aus Lotkörnern mit einem maximalen Durchmesser von 0,135 mm und einem minimalen Durchmesser von 0,015 mm,
- für eine Dicke von etwa 0,02 mm aus Lotkörnern mit einem maximalen Durchmesser von 0,08 mm und einem minimalen Durchmesser von 0,02 mm,
- für eine Dicke der Metallfolie, die dazwischen liegt, mit einem maximalen Durchmesser und einem minimalen Durchmesser der Lotkörner, der sich annähernd linear aus den entsprechenden Werten für die Dicke der Metallfolie von 0,05 mm und 0,02 mm ergibt, und weiterhin
- ein Maximalwert einer Gauß'schen Verteilung in Prozent bezüglich des jeweiligen Anteils der Durchmesser an der Lotkornfraktion etwa mittig zwischen dem maximalen und dem minimalen Durchmesser der Lotkornfraktion angeordnet ist.

Überraschenderweise hat sich ein linearer Zusammenhang zwischen dem maximalen Durchmesser und minimalen Durchmesser der Lotkörner einer Lotkornfraktion für die jeweils zu verbindende Metallfoliendicke herausgestellt. Darüber hinaus wurden sehr gut haltbare Metallfolienverbindungen für Metallfoliendicken DF von etwa 0,05 mm und weniger, insbesondere 0,03 mm und weniger, erzielt, indem der Maximalwert der Gauß'schen Verteilung bei geringer werdender Metallfoliendicke eben nicht zu einer kleineren Lotkorngröße verschoben wurde, sondern weiter mittig innerhalb der Verteilung angeordnet blieb. Behielt man die Glockenform der Gauß'schen Verteilung bei geringer werdender Metallfoliendicke mittig und veränderte diese bei Metallfoliendicken nicht, die bis zu 0,01 mm betrugen, so ergab sich eine äußerst haltbare Metallfolienverbindung.

Für einen maximalen Durchmesser der Lotkornfraktion hat sich die folgende Einstellregel als äußerst vorteilhaft erwiesen: der maximale Durchmesser der Lotkornfraktion ergibt sich aus den folgenden Werten:
- für eine Dicke von etwa 0,05 mm aus Lotkörnern mit einem maximalen Durchmesser von 0,125 mm, insbesondere 0,105 mm,
- für eine Dicke von etwa 0,02 mm aus Lotkörnern mit einem maximalen Durchmesser von 0,07 mm, insbesondere 0,063 mm,
- für eine Dicke der Metallfolie, die dazwischen liegt, mit einem maximalen Durchmesser der Lotkörner, der sich annähernd linear aus den entsprechenden Werten für die Dicke der Metallfolie von 0,05 mm und 0,02 mm ergibt.

Für einen minimalen Durchmesser der Lotkornfraktion ergab sich als äußerst vorteilhaft die folgende Einstellregel: Der minimale Durchmesser der Lotkornfraktion ergibt sich aus den folgenden Werten:
- für eine Dicke von etwa 0,05 mm aus Lotkörnern mit einem minimalen Durchmesser von 0,018 mm, insbesondere 0,023 mm,
- für eine Dicke von etwa 0,02 mm aus Lotkörnern mit einem minimalen Durchmesser von 0,03 mm, insbesondere 0,035 mm,
- für eine Dicke der Metallfolie, die dazwischen liegt: mit einem maximalen Durchmesser der Lotkörner, der sich annähernd linear aus den entsprechenden Werten für die Dicke der Metallfolie von 0,05 mm und 0,02 mm ergibt.

Für eine Dicke der Metallfolie von 0,03 mm und weniger ist überraschenderweise festgestellt worden, daß der minimale Durchmesser der Lotkörner nicht weiter absinken sollte. Vielmehr waren die Metallfolienverbindungen dann besonders dauerhaft, wenn der minimale Durchmesser etwa 0,03 mm, insbesondere 0,035 mm betrug. Lotkörner, deren Durchmesser darunter lagen, erhöhten die Haltbarkeit nicht. Vielmehr wurde oftmals eine Verschlechterung festgestellt.

Weiterhin wird zur Herstellung einer haltbaren Metallfolienverbindung ein nicht zur Erfindung gehörenden Verfahren geschaffen, wobei eine erste und eine zweite Metallfolie mittels einer Metallfolien-Lotkornfraktion verbunden werden,
- wobei die erste und die zweite Metallfolie eine Dicke von weniger als 0,05 mm aufweisen,
- wobei die beiden Metallfolien an einer Verbindungsstelle miteinander verlötet werden und die Verbindungsstelle einen oder zwei Zwickel ausbildet,
- wobei die erste und die zweite Metallfolie beleimt werden, bevor sie in Kontakt mit der Metallfolien-Lotkornfi-aktion treten Die Metallfolien-Lotkornfraktion wird nun so eingestellt, daß sie den Einstellregeln wie oben dargelegt genügt.

Daneben wird auf ein anderes nicht zur Erfindung gehörenden Verfahren zur Herstellung einer Metallfolienverbindung einer ersten und einer zweiten Metallfolie mittels einer Metallfolien-Lotkoinfraktion hingewiesen,
- wobei die erste und die zweite Metallfolie eine Dicke von weniger als 0,05 mm aufweist,
- wobei die beiden. Metallfolien an einer Verbindungsstelle miteinander verlötet werden und die Verbindungsstelle einen Zwickel ausbildet,
- wobei die erste und die zweite Metallfolie beleimt werden, bevor sie in Kontakt mit der Metallfolien-Lotkornfraktion treten,
und die erste und die zweite Metallfolie in einer ersten Stufe mit einer ersten Metallfolien-Lotkornfraktion Kontaktiert werden. Anschließend werden die Metallfolien in einer zweiten Stufe nochmals mit einer Metallfolien-Lotkornfraktion kontaktiert. Dabei werden Metallfolien verwendet, deren Dicke 0,03 mm und weniger beträgt. Bei derart geringen Materialdicken der Metallfolie hat sich überraschenderweise ein zweistufiges Belotungsverfahren trotz des höheren Aufwandes zweckmäßiger als ein einstufiges Belotungsverfahren herausgestellt. Es ergab sich eine bessere Haltbarkeit wie auch eine bessere Kontrolle der eingebrachten Lotmenge gegenüber einem reinen einstufigen Aufbringen der Metallfolien-Lotkornfraktion.

Verbessert wird dieses zweistufige Verfahren dadurch, daß die erste Metallfolien-Lotkornfraktion so gewählt wird, daß sie einen größeren maximalen und kleineren minimalen Durchmesser der Lotkörner aufweist, als eine in der zweiten Stufe verwendete Metallfolien-Lotkornfraktion. Dadurch gelingt es, die Lücken zu füllen, die noch offen geblieben sind. Vorteilhafterweise wird dabei in der ersten Stufe die erste Metallfolien-Lotkornfraktion so eingestellt, wie sie weiter oben schon beschrieben worden ist. Die zweite Metallfolien-Lotkornfraktion wird für die zweite Stufe wiederum zweckmäßigerweise so gewählt, daß der maximale Durchmesser der Lotkörner geringer als 0,07 mm und der minimale Durchmesser der Lotkörner größer als 0,04 mm ist. Bei Einhaltung dieser Einstellregeln haben sich besonders haltbare Metallfolienverbindungen ergeben. Insbesondere bei der Verlötung eines Wabenkörpers ergaben sich Metallfolienverbindungen ohne bzw. mit äußerst geringer Fehlerrate direkt nach dem Verlötungsvorgang sowie auch bei den nachfolgenden Tests.

Weitere vorteilhafte Ausgestaltungen und Merkmale der Erfindung werden in der nachfolgenden Zeichnung dargestellt. Diese Merkmale können auch jeweils mit weiteren, zweckmäßigen Ausgestaltungen und Ausführungsformen kombiniert werden. Es zeigen:
- Fig. 1: einen Zwickel, der aus zwei Metallfolien gebildet wird,
- Fig. 2: der Zusammenhang zwischen einer Lotmenge pro Verbindungspunkt einer Metallfolienverbindung in Abhängigkeit zur verwendeten Metallfolienstärke,
- Fig.3: einen Zwickel, gefüllt mit einer Standardlotkornfraktion,
- Fig.4: einen Zwickel, gefüllt mit einer modifizierten Lotkornfraktion,
- Fig. 5: eine Abhängigkeit zwischen der verwendeten Lotkornfraktion und der verwendeten Metallfoliendicke,
- Fig. 6: einen Zusammenhang zwischen der verwendeten Lotmenge in Abhängigkeit zur Metallfoliendicke,
- Fig. 7: einen Zusammenhang zwischen der verwendeten Lotkornfraktion in Abhängigkeit zur verwendeten Metallfolienstärke,
- Fig. 8: eine Tabelle über den Zusammenhang von maximalen und minimalen Verhältnissen der verwendeten Masse ML des Lotes zur Metallfoliendicke DF,
- Fig. 9: eine schematische Gauß'sche Verteilung der Durchmesser einer verwendeten Lotkornfraktion und
- Fig.10: einen weiteren Zusammenhang zwischen der verwendeten Lotmenge in Abhängigkeit zur Metallfoliendicke.

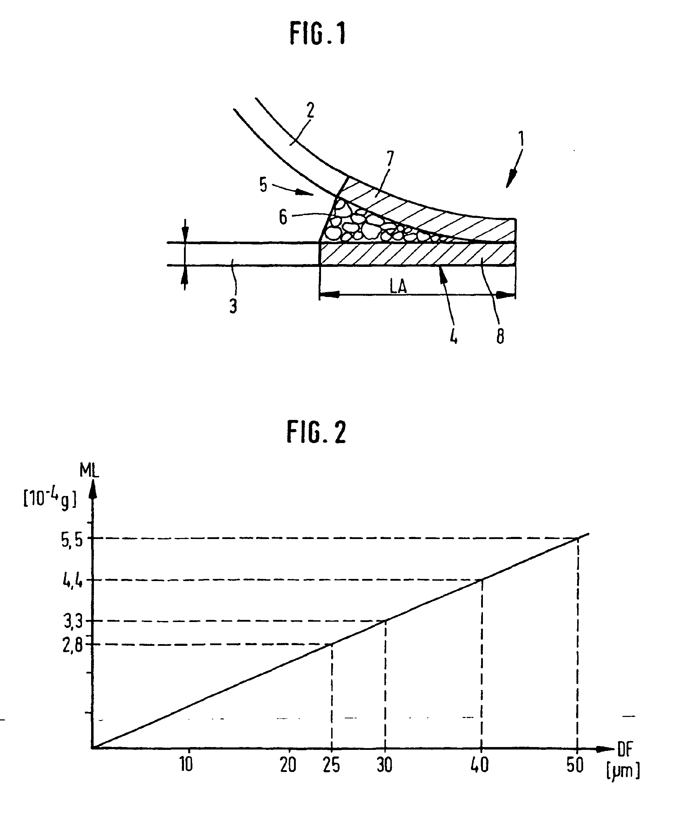

Fig.1 zeigt eine Metallfolienverbindung 1 mit einer ersten 2 und einer zweiten 3 Metallfolie. Die Metallfolien 2, 3 sind an einer Verbindungsstelle 4 verlötet. Die Verbindungsstelle 4 ist ein Zwickel 5 durch das Aufeinanderstoßen der ersten Metallfolie 2 auf die zweite Metallfolie 3. In dem Zwickel 5 befindet sich Lot 6. Dieses Lot 6 ist in Form einer Lotkornfraktion auf einen ersten Abschnitt 7 und einen zweiten Abschnitt 8 der ersten Metallfolie bzw. der zweiten Metallfolie 3 aufgebracht. Dieses ist beispielsweise nach einem Verfahren möglich, wie es aus der DE 4 219 145 Cl hervorgeht, was im folgenden ganz allgemein mit Beleimen bezeichnet wird, und auf dessen Offenbarung hier zurückgegriffen wird. Ebenfalls aber ist das Lot 6 auch durch andere in der DE 4 219 145 Cl beschriebenen Belotungsverfahren auftragbar, auf die hier ebenfalls verwiesen wird. Die erste Metallfolie 2 und zweite Metallfolie 3 weisen jeweils eine Metallfoliendicke DF von weniger als 0,05 mm auf. Die Oberflächen beider Metallfolien 2, 3 kann zur besseren Haftung des Lotes 6 jeweils vorbehandelt sein oder aber Mikrostrukturen aufweisen. Eine Masse ML des Lotes 6, welche sich im Zwickel 5 befindet, wird so eingestellt, daß die Masse ML zu einer Masse MF des ersten Abschnittes 7 und zweiten Abschnittes 8 der ersten Metallfolie 2 und zweiten Metallfolie 3 in einem etwa konstanten Verhältnis stehen, unabhängig davon, welche Metallfoliendicke DF gewählt worden ist. Die Masse MF der Abschnitte 7, 8 ergibt sich dabei aus Addition der jeweiligen einzelnen Massen des ersten Abschnittes 7 und des zweiten Abschnittes 8. Diese wiederum ergeben sich aus der jeweiligen Metallfoliendicke DF sowie einer Länge LA des Abschnittes, der mit Lot kontaktiert ist. Hinzugezählt wird dabei auch die Länge des tatsächlichen Zusammenstoßens beider Metallfolien 2, 3. Dieses in etwa konstante Verhältnis bleibt auch in etwa erhalten, wenn die erste Metallfolie 2 eine andere Metallfoliendicke DF aufweist als die zweite Metallfolie 3.

Figur 2 zeigt die Abhängigkeit zwischen der Lotmasse ML des Lotes an einer Verbindungsstelle in Abhängigkeit zur gewählten Metallfoliendicke DF. Dabei ergibt sich die oben schon angesprochene in etwa lineare Abhängigkeit für Metallfoliendicken kleiner als 0,05 mm. Nicht nur das Verhältnis MF/ML = konstant, sondern auch die Steigung aus Δ ML/Δ DF ist ebenfalls in etwa linear für eine dauerhafte Metallfolienverbindung. Dieses ermöglicht, bei Auswahl verschiedener Metallfoliendicken immer sofort auf die geeignete Masse des Lotes ML interpolieren oder extrapolieren zu können. Besonders haltbare Metallfolienverbindungen bei Wabenkörpern haben sich für die folgenden Wertpaare (DF[Mikrometer] ; ML [10⁻⁴ Gramm]) wie aus Figur 2 ersichtlich ergeben: (50; 5,5), (40; 4,4), (30; 3,3), (25; 2,8). Befindet sich die Masse des Lotes ML für die angesprochenen Metallfoliendicken DF innerhalb dieser Werte, natürlich mit entsprechender Abweichung nach oben wie auch nach unten von etwa 10% in Abhängigkeit von der Materialbeschaffenheit sowie des Lotverfahrens, so werden die ansonsten bei üblicher Belotung aufgetretenen Zellverbrennungen sowie Zelldeformationen vermieden.

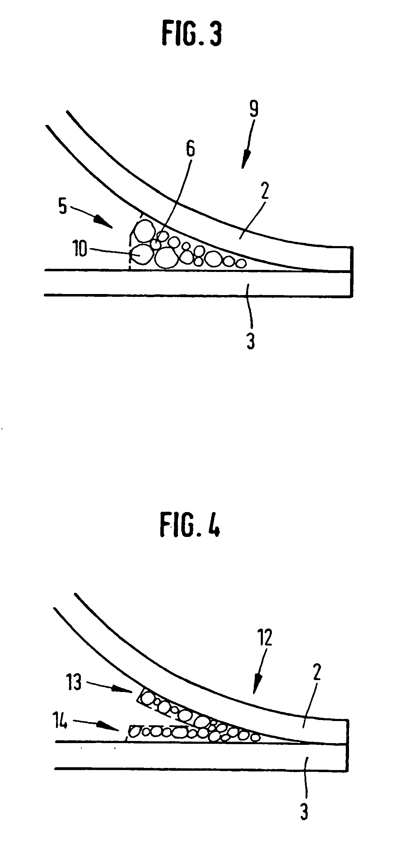

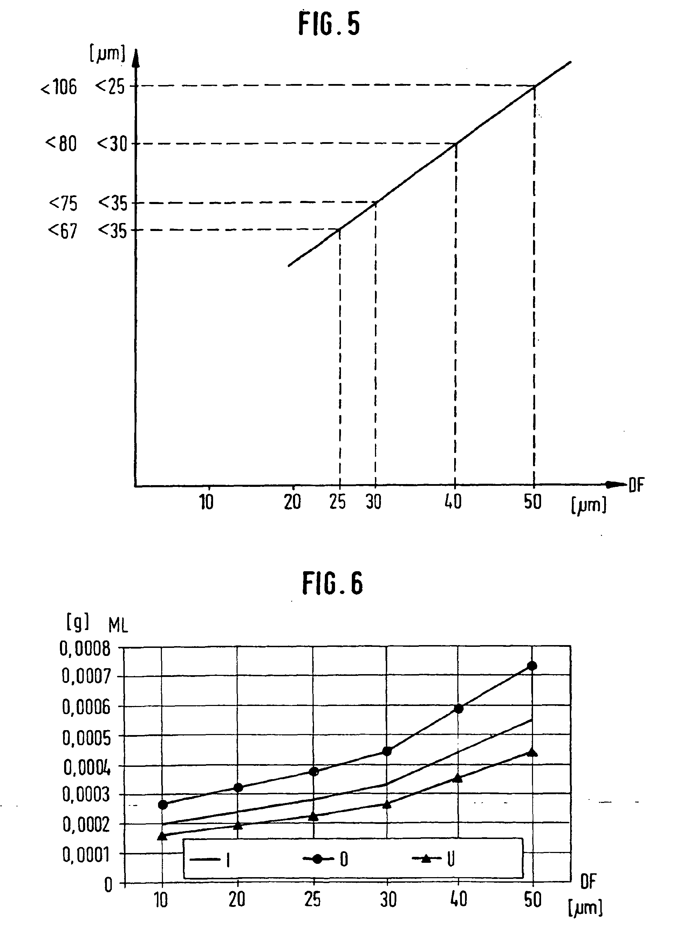

Figur 3 zeigt eine weitere Metallfolienverbindung 9. In dem Zwickel 5 ist eine zum Stand der Technik gehörende Standard-Lotkornfraktion 10 eingebracht. Der Zwickel 5 ist aufgrund der Verwendung mit dieser Standard-Lotkornfraktion 10 an seinem Rand 11 vollkommen abgeschlossen. Das bedeutet, zwischen der ersten Metallfolie 2 und der zweiten Metallfolie 3 befindet sich eine zusammenhängende, miteinander vollständig verbundene Ansammlung an Lot 6, welches die Form eines Keiles zwischen den Metallfolien 2, 3 annimmt. Hiervon unterscheidet sich eine andere Metallfolienverbindung, wie sie in der nachfolgenden Figur 4 vor dem Verlöten dargestellt ist.

Die Figur 4 zeigt eine andere Metallfolienverbindung 12 einer ersten Metallfolie 2 und zweiten Metallfolie 3. Auf diesen beiden Metallfolien 2, 3 ist das Lot 6 in Form einer ersten Schicht 13 auf der ersten Metallfolie 2 und einer zweiten Schicht 14 auf der zweiten Metallfolie 3 aufgebracht. Dieses gelingt durch Einsatz einer gegenüber der Standard -Lotkomfraktion geänderten modifizierten Lotkornfraktion, wie sie oben in der allgemeinen Beschreibung dargestellt worden ist. Zumindest aufgrund der geringeren Lotmenge an der Metallfolienverbindung 12 gegenüber der der Metallfolienverbindung 9 aus Figur 3 besteht aufgrund der geringen Metallfoliendicke DF insbesondere von 0,03 mm und weniger nicht die Gefahr, daß das Lot durch die Metallfolien 2,3 hindurchdiffundiert bzw. beim Verlöten zu einer Randspaltbildung insbesondere bei einer Wabenkörpergeometrie führt.

Figur 5 zeigt den Zusammenhang auf zwischen Auswahl einer geeigneten Lotkornfraktion, dargestellt auf der Y-Achse, und der gewählten Metallfoliendicke DF, dargestellt auf der X-Achse. Für eine Metallfoliendicke DF von 50 Mikrometern wird eine Lotkornfraktion eingesetzt, deren kleinster Lotkorndurchmesser größer als 25 Mikrometer und deren größter Lotkorndurchmesser weniger als 106 Mikrometer beträgt. Bei geringer werdender Metallfoliendicke DF wird nun die Lotkornfraktion so eingestellt, daß der maximal größte Lotkorndurchmesser immer weiter verkleinert wird, der kleinstmögliche Lotkorndurchmesser dagegen immer weiter angehoben wird. Dieses führt zu dem Ergebnis, daß ab einer gewissen Metallfoliendicken DF nur noch Lotkorndurchmesser vorhanden sind, die größer sind als die eigentliche Metallfoliendicke DF. Die Gauß'sche Verteilung mit ihrem Maximalwert tendiert also nicht bei geringer werdender Metallfoliendicke DF immer weiter nach unten zu immer kleineren Lotdurchmessern. Vielmehr bleibt diese von der Glockenform her gleich und steuert nur in den Randbereichen immer enger werdend auf den mittig liegenden Maximalwert zu. Dieser Zusammenhang ist in etwas anderer Weise in der Figur 5 dargestellt. Die Lotkornfraktionen sind entsprechend einer Geradengleichung entlang des Maximalwertes des Lotkorndurchmessers der einzelnen Lotkornfraktion miteinander verbunden. Diese Einstellregel der Lotkornfraktion geht des weiteren auch aus den nachfolgenden Figuren hervor:

Figur 6 zeigt eine Einstellregel, um bei Metallfoliendicken von weniger als 50 Mikrometern haltbare Metallfolienverbindungen herstellen zu können, insbesondere, wenn es Metallfolienverbindungen von Wabenkörpern für Abgaskatalysatoren sein sollen, die neben thermischen auch mechanischen Belastungen ausgesetzt sind. Auf der Y-Achse ist die Masse des Lotes ML pro Metallfolienverbindung in Gramm angegeben. Das bedeutet also diejenige Masse, die sich in einem Zwickel befinden soll Auf der X-Achse ist dagegen die Metallfoliendicke DF aufgetragen. Im Diagramm eingezeichnet sind eine Obergrenze O und eine Untergrenze U der Masse ML. Eine besonders gute Haltbarkeit der Metallfolienverbindung hat sich ergeben, wenn die Masse des Lotes ML für die jeweilige Metallfoliendicke DF entlang der Linie I gewählt wurde. Zu beachten bei dieser Darstellung ist, daß zwischen der Metallfoliendicke DF von 20 Mikrometern und 30 Mikrometern noch eine extra Metallfoliendicke DF von 25 Mikrometern eingeführt worden ist. Dadurch erscheint die Kurve insbesondere im Bereich von weniger als 30 Mikrometer linearer als sie im Grunde genommen ohne Verzerrung der X-Achse wäre. Trotzdem kann man diesem Diagramm entnehmen, daß zwischen 30 Mikrometer und 50 Mikrometer ein in etwa linearer Zusammenhang zwischen der Masse ML und der Metallfoliendicke DF besteht. Unterhalb von 30 Mikrometern flacht die Steigung der Kurve etwas ab. Im weiteren ist zu erkennen, daß die Bandbreite des auswählbaren Massenbereiches sich immer weiter nach unten zu geringeren Metallfoliendicken DF trichterförmig verengt. Ein in etwa Idealwert der gewählten Masse ML entlang der Kurve I verläuft dabei näher zur Untergrenze U denn zur Obergrenze O. Für einen komplexer zu lötenden Körper, wie z.B. einem Wabenkörper, ergibt sich daher die Einstellregelung für das Belotungsverfahren, sich zwar möglichst entlang von Idealwerten gemäß der Kurve I zu bewegen, trotzdem aber dafür Sorge zu tragen, daß die untere Grenze nicht unterschritten wird. Aufgrund der Nähe der Kurve I zur Untergrenze U besteht diese Gefahr eher als das Überschreiten der Obergrenze O.

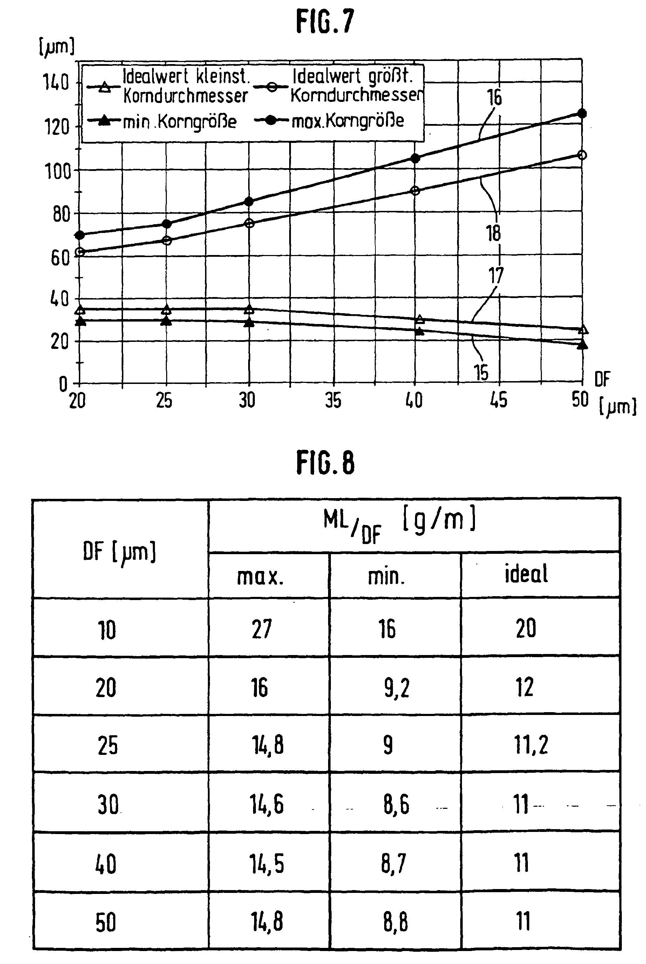

Aus der Figur 7 geht eine Bandbreite der Korngröße, aufgetragen auf der Y-Achse in Mikrometern, in Abhängigkeit zur gewählten Metallfoliendicke DF, aufgetragen auf der X-Achse, hervor. Dieses Diagramm zeigt exemplarisch eine Bandbreite, wie sie für die Belotung eines Wabenkörpers gefunden worden ist. Eine mit ausgefüllten. Dreiecken erste Kurve 15 zeigt die Grenze der minimal zu wählenden Korngröße. Eine zweite Kurve 16 zeigt eine zu wählende maximale Korngröße in Abhängigkeit von der Metallfoliendicke DF. Besonders gute Metallfolienverbindungen haben sich beim Wabenkörper eingestellt, wenn die kleinsten Korndurchmesser der Lotkornfraktion entlang einer dritten Kurve 17 und die größten Korndurchmesser der Lotkornfraktion entlang einer vierten Kurve 18 verliefen. Weiterhin ist aus dem Diagramm zu entnehmen, daß Ober- wie Untergrenze der Lotkornfraktion bezüglich der Korngröße bei geringer werdender Metallfoliendicke DF schlauchförmig aufeinander zugehen. Ein Absolutwert der Steigung der zweiten Kurve 16 und vierten Kurve 18 ist dabei größer als derjenige der ersten Kurve 15 und dritten Kurve 17. Insbesondere ab einer Metallfoliendicke DF von 30 Mikrometer und weniger tendiert die absolute Steigung der ersten Kurve 15 und dritten Kurve 17 gegen 0.

Figur 8 gibt den Zusammenhang aus Figur 6 wieder, wobei hierbei die Masse des Lotes ML in Abhängigkeit von der Metallfoliendicke DF als Quotient gegenüber der Metallfoliendicke DF dargestellt ist. Zu erkennen ist, daß der Quotient bis zu einer Metallfoliendicke DF von 30 Mikrometern in etwa gleich bleibt, während bei 30 Mikrometern und weniger der Quotient ML durch DF immer weiter ansteigt.

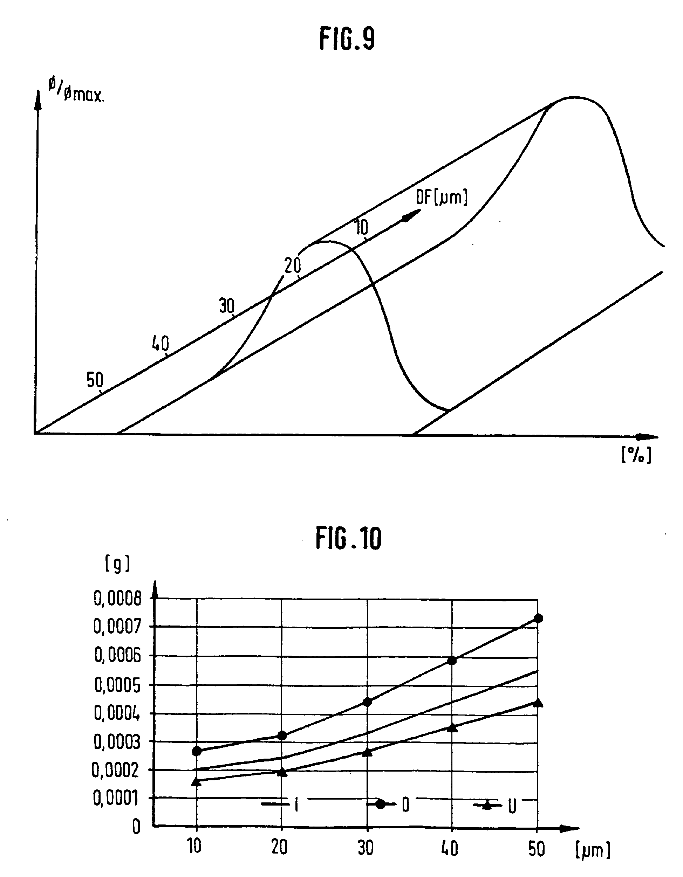

Figur 9 zeigt eine schematische Darstellung der Gauß'schen Verteilung der Lotkorndurchmesser in Abhängigkeit von der Metallfoliendicke DF. Auf der Y-Achse ist der Lotkorndurchmesser zum maximalen Lotkorndurchmesser aufgetragen. Auf der X-Achse ist die prozentuale Verteilung dargestellt. Zu erkennen ist, daß zum einen das Maximum des Lotkorndurchmessers in etwa mittig der Bandbreite der Lotkornfraktion liegt. Des weiteren ist zu erkennen, daß die Glockenform sich prinzipiell bei geringer werdender Metallfoliendicke DF nicht ändert, genauso wenig wie die prozentuale Verteilung der Lotkornfraktion an und für sich.

Figur 10 zeigt nochmals den Zusammenhang zwischen der verwendeten Lotmenge in Abhängigkeit zur Metallfoliendicke, wie er auch schon aus Fig. 6 hervorgeht. In Fig. 10 ist allerdings die Verzerrung auf der X-Achse aufgehoben, da die Einteilung nun gleichmäßig ist. Zu erkennen ist bei diesen Meßwerten die Linearität von Untergrenze U, Obergrenze O und Idealverlauf I bis etwa 20 Mikrometer, um dann etwas abzuknicken.

Insgesamt haben sich besonders gut haltbare Metallfolienverbindungen, insbesondere Wabenkörper ergeben, wenn eine Metallfolienverbindung mit einer Metallfolien-Lotkornfraktion und/oder einem Verfahren, wie jeweils oben beschrieben, eingesetzt wurde.

### Bezugszeichenliste

- 1: Metallfolienverbindung
- 2: erste Metallfolie
- 3: zweite Metallfolie
- 4: Verbindungsstelle
- 5: Zwickel
- 6: Lot
- 7: erster Abschnitt
- 8: zweiter Abschnitt
- 9: weitere Metallfolienverbindung
- 10: Standard-Lotkornfraktion
- 11: Rand
- 12: Metallfolienverbindung
- 13: erste Schicht Lot
- 14: zweite Schicht Lot
- 15: erste Kurve
- 16: zweite Kurve
- 17: dritte Kurve
- 18: vierte Kurve

- DF: Metallfoliendicke
- LA: Länge des Abschnittes
- ML: Masse des Lotes
- MF: Masse der Abschnitte der Folien

- U: Untergrenze der Masse des Lotes
- O: Obergrenze der Masse des Lotes
- I: Idealwert der Masse des Lotes

## Patentansprüche

1. Verfahren zur Herstellung einer Metallfolienverbindung (1; 12) einer ersten (2) und einer zweiten (3) Metallfolie, wobei die erste (2) und die zweite (3) Metallfolie eine Dicke von weniger als 0,04 mm aufweisen und miteinander an einer Verbindungsstelle (4) verlötet sind, wobei die Verbindungsstelle (4) einen Zwickel (5) hat, der im wesentlichen mit Lot (6) gefüllt ist, **dadurch gekennzeichnet, dass** eine Masse ML des Lotes und eine Masse MF derjenigen Abschnitte (7,8) der Metallfolien, die das Lot (6) im Zwickel (5) kontaktiert, ein vorgebbares Verhältnis haben, wobei das Verhältnis von MF/ML von etwa 4 bis etwa 8 reicht.

2. Verfahren zur Herstellung einer Metallfolienverbindung (1; 12) einer ersten (2) und einer zweiten (3) Metallfolie, wobei die erste (2) und die zweite (3) Metallfolie eine Dicke von weniger als 0,04 mm aufweisen und miteinander an einer Verbindungsstelle (4) verlötet sind, wobei die Verbindungsstelle (4) einen Zwickel (5) hat, der mit Lot (6) gefüllt ist, **dadurch gekennzeichnet, dass** sich im Zwickel (5) eine Masse des Lotes ML im Verhältnis zu einer Metallfoliendicke DF von etwa ML/DF= 16 g/m bis 8 g/m befindet.

3. Verfahren nach Anspruch 2, **dadurch gekennzeichnet, dass** bei einer Metallfoliendicke DF von weniger als 0,04 mm bis etwa 0,03 mm eine Obergrenze (O) der Masse des Lotes ML sich in etwa linear in Abhängigkeit zur Metallfoliendicke DF verringert.

4. Verfahren nach Anspruch 2 oder 3, **dadurch gekennzeichnet, dass** die Obergrenze (O) der Masse des Lotes ML im Verhältnis zur Metallfoliendicke DF etwa ML/DF=14,6 g/m mit einer Abweichung von +5% und -5% beträgt.

5. Verfahren nach Anspruch 2, **dadurch gekennzeichnet, dass** eine Untergrenze (U) der Masse des Lotes ML sich in etwa linear in Abhängigkeit zur Metallfoliendicke DF verringert.

6. Verfahren nach Anspruch 5, **dadurch gekennzeichnet**, das die Untergrenze (U) der Masse des Lotes ML im Verhältnis zur Metallfoliendicke DF etwa ML/DF=8,7 g/m mit einer Abweichung von +5% und -5% beträgt.

7. Verfahren nach einem der vorhergehenden Ansprüche 2 bis 6, **dadurch gekennzeichnet, dass** ab einer Metallfoliendicke DF von etwa 0,03 mm und weniger eine Obergrenze (O) der Masse des Lotes ML in Abhängigkeit zur Metallfoliendicke DF entlang einer Kurve erfolgt, die durch die folgenden Punkte (ML/DF;DF) verläuft:
(14,6 g/m; 0,03 mm), (14,8 g/m; 0,025mm), (16 g/m; 0,02 mm), (27 g/m; 0,01 mm).

8. Verfahren nach einem der vorhergehenden Ansprüche 2 bis 6, **dadurch gekennzeichnet, dass** ab einer Metallfoliendicke DF von etwa 0,03 mm und weniger eine Untergrenze (U) der Masse des Lotes ML in Abhängigkeit zur Metallfoliendicke DF entlang einer Kurve erfolgt, die durch die folgenden Punkte (ML/DF;DF) verläuft:
(8,6 g/m; 0,03 mm), (9 g/m; 0,025mm), (9,2 g/m; 0,02 mm), (16 g/m, 0,01 mm).

9. Verfahren nach einem der vorhergehenden Ansprüche 2 bis 6, **dadurch gekennzeichnet, dass** ab einer Metallfoliendicke DF von etwa 0,03 mm und weniger die Masse des Lotes ML in Abhängigkeit zur Metallfoliendicke DF etwa entlang einer Kurve erfolgt, die durch die folgenden Punkte (ML/DF;DF) verläuft:
(11 g/m; 0,03 mm), (11,2 g/m; 0,025mm), (12 g/m; 0,02 mm), (20 g/m; 0,01 mm).

10. Verfahren nach Anspruch 2, **dadurch gekennzeichnet, dass** das Verhältnis der Masse des Lotes ML im Zwickel (5) zu der Metallfoliendicke DF etwa ML/DF=11 g/m mit einer Abweichung von +15% und -10% beträgt.

11. Verfahren zur Herstellung eines Wabenkörpers aus Blechlagen, wobei:
- die Blechlagen aus zumindest teilweise strukturierter Metallfolie gebildet werden,
- die Metallfolie eine Dicke von weniger als 0,04 mm aufweist,
- die Blechlagen zumindest zum Teil miteinander verlötet sind und
- an den verlöteten Verbindungsstellen (4) jeweils einen Zwickel (5) haben, der im wesentlichen mit Lot (6) gefüllt ist,
**dadurch gekennzeichnet, dass** die Metallfolien des Wabenköpers gemäß einem Verfahren zur Herstellung einer Metallfolienverbindung (1; 12) nach einem der Ansprüche 1 bis 10 verbunden werden.

## Claims

1. Method for the manufacture of a metal foil connection (1; 12) of a first (2) and a second (3) metal foil, wherein the first (2) and the second (3) metal foil have a thickness of less than 0.04 mm, and are brazed to one another at a connecting point (4), wherein the connecting point (4) forms a wedge (5) which is substantially filled with brazing medium (6), **characterized in that** a mass ML of the brazing medium and a mass MF of those sections (7, 8) of the metal foils which the brazing medium (6) contacts in the wedge (5) are in a predeterminable ratio, wherein the ratio of MF/ML extends from approximately 4 to approximately 8.

2. Method for the manufacture of a metal foil connection (1; 12) of a first (2) and a second (3) metal foil, wherein the first (2) and the second (3) metal foil have a thickness of less than 0.04 mm, and are brazed to one another at a connecting point (4), wherein the connecting point (4) comprises a wedge (5) which is filled with brazing medium (6) **characterized in that** in the wedge (5) there is located a mass of the brazing medium ML in a ratio to a metal foil thickness DF of approximately ML/DF = 16 g/m to 8 g/m.

3. Method according to claim 2, **characterized in that** with a metal foil thickness DF of less than 0.04 mm to approximately 0.03 mm an upper limit (0) of the mass of a brazing medium ML decreases in approximately linear fashion depending upon the metal foil thickness DF.

4. Method according to claim 2 or 3, **characterized in that** the upper limit (O) of the mass of brazing medium ML in relation to the metal foil thickness DF is approximately ML/DF = 14.6 g/m with a variation of + 5 % and - 5 %.

5. Method according to claim 2, **characterized in that** a lower limit (U) of the mass of brazing medium ML decreases in an approximately linear fashion depending upon the metal foil thickness DF.

6. Method according to claim 5, **characterized in that** the lower limit (U) of the mass of brazing medium ML in relation to the metal foil thickness DF is approximately ML/DF = 8.7 g/m with a variation of + 5 % and - 5 %.

7. Method according to one of the preceding claims 2 to 6, **characterized in that** for a metal foil thickness DF of approximately 0.03 mm or less an upper limit (O) of the mass of brazing medium ML depending on the metal foil thickness DF is along a curve which passes through the following points (ML/DF; DF):
(14.6 g/m; 0.03 mm), (14.8 g/m; 0.025 mm), (16 g/m; 0.02 mm), (27 g/m; 0.01 mm).

8. Method according to one of the preceding claims 2 to 6, **characterized in that** for a metal foil thickness DF of 0.03 mm and less a lower limit (U) of the mass of brazing medium ML depending on the metal foil thickness DF is along a curve which passes through the following points (ML/DF; DF):
(8.6 g/m; 0.03 mm), (9 g/m; 0.025 mm), (9.2 g/m; 0.02 mm), (16 g/m, 0.01 mm).

9. Method according to one of the preceding claims 2 to 6, **characterized in that** for a metal foil thickness DF of approximately 0.03 mm and less the mass of brazing medium ML depending on the metal foil a thickness DF is along a curve which passes through the following points (ML/DF; DF):
(11 g/m; 0.03 mm), (11.2 g/m; 0.025 mm), (12 g/m; 0.02 mm), (20 g/m; 0.01 mm).

10. Method according to claim 2, **characterized in that** the ratio of the mass of brazing medium ML in the wedge (5) to the metal foil thickness DF is approximately ML/DF = 11 g/m with a variation of + 15 % and - 10 %.

11. Method for the manufacture of a honeycomb body of sheet metal layers, wherein:
- the sheet metal layers are formed from metal foils which are at least in part structured,
- the metal foil has a thickness of less than 0.04 mm,
- the sheet metal layers are at least in part brazed to one another and
- at the brazed connecting points (4) comprise respectively a wedge (5) which is substantially filled with brazing medium (6),
**characterized in that** the metal foils of the honeycomb body are connected according to a method for the manufacture of a metal foil connection (1; 12) according to one of claims 1 to 10.

## Revendications

1. Procédé pour la fabrication d'une liaison de feuilles métalliques (1 ; 12) d'une première (2) et d'une deuxième (3) feuille métallique, la première (2) et la deuxième (3) feuille métallique ayant une épaisseur de moins de 0,04 mm et étant brasées l'une à l'autre dans une zone de liaison (4), la zone de liaison (4) ayant un coin (5) qui est sensiblement garni de matériau de brasure (6), **caractérisé en ce qu'**une masse ML du matériau de brasure et une masse MF des sections (7, 8) des feuilles métalliques qui sont contactées par le matériau de brasure (6) dans le coin (5) ont un rapport pouvant être prédéterminé, le rapport de MF/ML s'étendant d'environ 4 à environ 8.

2. Procédé pour la fabrication d'une liaison de feuilles métalliques (1 ; 12) d'une première (2) et d'une deuxième (3) feuille métallique, la première (2) et la deuxième (3) feuille métallique ayant une épaisseur de moins de 0,04 mm et étant brasées l'une à l'autre dans une zone de liaison (4), la zone de liaison (4) ayant un coin (5) qui est garni de matériau de brasure (6), **caractérisé en ce que** dans le coin (5) se trouve une masse du matériau de brasure ML par rapport à une épaisseur de feuille métallique DF d'environ ML/DF=16 g/m à 8 g/m.

3. Procédé selon la revendication 2, **caractérisé en ce qu'**avec une épaisseur de feuille métallique DF de moins de 0,04 mm jusqu'à environ 0,03 mm une limite supérieure (O) de la masse du matériau de brasure ML diminue environ de manière linéaire en fonction de l'épaisseur de la feuille métallique DF.

4. Procédé selon la revendication 2 ou 3, **caractérisé en ce que** par rapport à l'épaisseur de la feuille métallique DF la limite supérieure (O) de la masse du matériau de brasure ML comporte environ ML/DF=14,6 g/m avec un écart de +5 % et de -5 %.

5. Procédé selon la revendication 2, **caractérisé en ce qu'**une limite inférieure (U) de la masse du matériau de brasure ML diminue environ de manière linéaire en fonction de l'épaisseur de la feuille métallique DF.

6. Procédé selon la revendication 5, **caractérisé en ce que** par rapport à l'épaisseur de la feuille métallique DF la limite inférieure (U) de la masse du matériau de brasure ML comporte environ ML/DF=8,7 g/m avec un écart de +5 % et de -5 %.

7. Procédé selon l'une des revendications précédentes 2 à 6, **caractérisé en ce qu'**à partir d'une épaisseur de feuille métallique DF d'environ 0,03 mm et moins une limite supérieure (O) de la masse du matériau de brasure ML est effectuée en fonction de l'épaisseur de feuille métallique DF le long d'une courbe qui passe par les points (ML/DF ; DF) suivants :
(14,6 g/m ; 0,03 mm), (14,8 g/m ; 0,025 mm), (16 g/m ; 0,02 mm), (27 g/m ; 0,01 mm).

8. Procédé selon l'une des revendications précédentes 2 à 6, **caractérisé en ce qu'**à partir d'une épaisseur de feuille métallique DF d'environ 0,03 mm et moins une limite inférieure (U) de la masse du matériau de brasure ML est effectuée en fonction de l'épaisseur de feuille métallique DF le long d'une courbe qui passe par les points (ML/DF ; DF) suivants :
(8,6 g/m; 0,03 mm), (9 g/m; 0,025 mm), (9,2 g/m; 0,02 mm), (16 g/m, 0,01 mm).

9. Procédé selon l'une des revendications précédentes 2 à 6, **caractérisé en ce qu'**à partir d'une épaisseur de feuille métallique DF d'environ 0,03 mm et moins la masse du matériau de brasure ML est effectuée en fonction de l'épaisseur de feuille métallique DF environ le long d'une courbe qui passe par les points (ML/DF ; DF) suivants :
(11 g/m ; 0,03 mm), (11,2 g/m ; 0,025 mm), (12 g/m ; 0,02 mm), (20 g/m; 0,01 mm).

10. Procédé selon la revendication 2, **caractérisé en ce que** le rapport de la masse entre le matériau de brasure ML dans le coin (5) et l'épaisseur de feuille métallique DF comporte environ ML/DF=11 g/m avec un écart de +15 % et de -10 %.

11. Procédé pour la fabrication d'un corps en nids d'abeilles de couches de tôle, dans quel cas :
- les couches de tôle sont formées de feuilles métalliques au moins partiellement structurées,
- la feuille métallique a une épaisseur de moins de 0,04 mm,
- les couches de tôle sont au moins partiellement brasées l'une à l'autre et
- ont respectivement un coin (5) dans les zones de liaison brasées (4) qui est sensiblement garni de matériau de brasure (6),
**caractérisé en ce que** les feuilles métalliques du corps en nids d'abeilles sont reliées selon un procédé pour la fabrication d'une liaison de feuilles métalliques (1 ; 12) selon l'une des revendications 1 à 10.
